# FASCICULE DE BREVET EUROPEEN

(11) **EP 4 426 588 B1**
(45) Date de publication et mention de la délivrance du brevet: **12.11.2025**
(21) Numéro de dépôt: 22797409.4
(22) Date de dépôt: 28.09.2022
(51) Int. Cl.: B60R 19/12, B60K 11/04

(54) **ENSEMBLE DE PROTECTION AVANT POUR VÉHICULE AUTOMOBILE**
FRONTSCHUTZANORDNUNG FÜR EIN KRAFTFAHRZEUG
FRONT PROTECTION ASSEMBLY FOR MOTOR VEHICLE

(30) Priorité: 03.11.2021 FR 2111646
(43) Date de publication de la demande: 11.09.2024
(73) Titulaire: Stellantis Auto SAS, 78300 Poissy (FR)
(72) Inventeur: DEVARAJAN, Lakshminarayanan, CHENNAI 600097 (IN); SAKTHIVEL, Sundaramoorthy, CHENNAI, 60091 (IN); TIWARI, Kameshwar, CHENNAI 600097 (IN)
(74) Mandataire: BCIP
(86) Numéro de dépôt international: PCT/FR2022/051834
(87) Numéro de publication internationale: WO 2023/079218

(56) Documents cités:
- JP-A- 2002 145 123
- JP-A- 2004 256 075
- JP-A- 2008 049 935

## Description

Le contexte technique de la présente invention est celui des équipements de sécurité de véhicules automobiles conçus pour protéger les piétons en évitant les blessures en cas d'accidents ou d'autres incidents dus à la circulation. Plus particulièrement, l'invention a trait à un ensemble de protection avant pour véhicule automobile.

Dans l'état de la technique, on connait des absorbeurs d'énergie de systèmes de pare-chocs avant qui offrent une sécurité efficace pour les piétons avec un poids et un coût optimal pour tous les programmes de véhicules. De façon générale, les véhicules automobiles sont équipés d'un absorbeur d'énergie en arrière d'une plaque d'immatriculation avant, derrière une peau de parechoc. L'absorbeur d'énergie coopère avec une traverse de pare-chocs fixée solidairement à un châssis du véhicule automobile et qui transfert, consécutivement à un impact à basse vitesse, une énergie cinétique d'impact à basse vitesse vers la traverse de pare-chocs. Ces absorbeurs d'énergie de pare-chocs comprennent généralement des éléments structurels fixés au châssis du véhicule automobile et l'absorbeur d'énergie agit comme un moyen de résistance entre les éléments structurels. Lors d'un impact à l'avant du véhicule automobile, l'énergie cinétique est convertie par déformation plastique des éléments mécaniques situés entre le pare-chocs et l'habitacle et les passagers. JP 2008 049935 A divulgue un ensemble de protection avant pour véhicule avec une traverse de pare chocs, un support de radiateur, des jambes inférieures de fixation étant solidarisées au support de radiateur et un barre receveuse de fixation.

Cependant, comme les véhicules automobiles à moteur sont devenus plus compacts, la capacité d'absorption d'énergie d'une structure de la carrosserie du véhicule automobile a diminué, car la portée entre l'habitacle et la traverse de pare-chocs a diminué.

La présente invention a pour objet de proposer un ensemble de protection avant pour véhicule automobile afin de répondre au moins en grande partie aux problèmes précédents et de conduire en outre à d'autres avantages.

Un autre but de l'invention est de proposer un ensemble de protection avant pour véhicule automobile qui permette d'améliorer la sécurité d'un piéton impacté dans un tel choc à l'avant.

Un autre but de l'invention est de proposer un ensemble de protection avant pour véhicule automobile simple, tant du point de vue de sa mise en œuvre, que du point de vue de sa fabrication.

Selon un premier aspect de l'invention, on atteint au moins l'un des objectifs précités avec un ensemble de protection avant pour véhicule automobile, l'ensemble de protection comportant : (i) une traverse de parechoc fixée à chacune de ses extrémités latérales à des extensions de longeron destinées à être fixées solidairement à des longerons avant du véhicule automobile ; (ii) un support de radiateur situé d'un premier côté relativement à la traverse de parechoc ; (iii) des jambes inférieures de fixation situées latéralement de part et d'autre du support de radiateur, le support de radiateur étant fixés solidairement aux jambes inférieures de fixation au niveau de terminaisons latérales dudit support de radiateur, les jambes inférieures de fixation étant fixés solidairement à la traverse de parechoc au niveau de ses extensions de longeron ; (iv) une barre receveuse de jambe située simultanément à hauteur du support de radiateur et en avant dudit support de radiateur, la barre receveuse de jambe étant liée aux jambes inférieures de fixation par l'intermédiaire d'un organe de liaison. La barre receveuse de jambe est fixée solidairement au support de radiateur par l'intermédiaire d'une patte de fixation. L'organe de liaison comporte : (i) une patte de liaison qui s'étend depuis la jambe inférieure de fixation vers la barre receveuse de jambe ; (ii) une patte d'équerrage qui s'étend entre la patte de liaison et la barre receveuse de jambe, la patte d'équerrage formant un angle non nul avec la patte de liaison. On entend par angle non nul le fait que la patte d'équerrage et la patte de liaison s'étendent transversalement l'une par rapport à l'autre.

Dans l'ensemble de protection avant conforme au premier aspect de l'invention, la barre receveuse de jambe est destinée à fournir un contact pour les jambes d'un piéton percuté par un véhicule automobile équipé de l'invention. Consécutivement à un choc piéton, la barre receveuse de jambe permet d'empêcher le piéton d'atteindre le support de radiateur et/ou de passer sous le support de radiateur et/ou de passer sous le véhicule automobile équipé de l'invention. Cette barre receveuse permet plus particulièrement de réduire une torsion de la jambe au niveau du genou en cas de choc contre un piéton : elle contribue donc à diminuer la gravité de la blessure consécutive au choc.

Dans l'ensemble de protection avant conforme au premier aspect de l'invention, la barre receveuse de jambe est fixée solidairement aux jambes inférieures de fixation et au support de radiateur. Dans l'ensemble de protection avant conforme au premier aspect de l'invention, la patte de fixation fixe solidairement la barre receveuse au support de radiateur. La patte de fixation fiabilise la fixation de la barre receveuse dans l'ensemble de protection avant conforme au premier aspect de l'invention. Elle permet aussi de conférer à la barre receveuse de jambe une meilleure rigidité au niveau de sa partie médiane, notamment en flexion suite à un choc piéton.

Un tel ensemble de protection avant, pourvu de la barre receveuse de jambe fixée solidairement au support de radiateur par l'intermédiaire d'une patte de fixation permet d'assurer la sécurité d'un piéton percuté par un véhicule automobile équipé de l'invention. Ainsi, cette solution permet de protéger un piéton de blessures graves, tout en étant simple à mettre en œuvre. L'ensemble de protection avant selon l'invention présente l'avantage de pallier les inconvénients cités plus haut, sans avoir à apporter de modification importante au véhicule automobile qu'il équipe.

Dans l'ensemble de protection avant conforme au premier aspect de l'invention, le premier côté du côté duquel le support de radiateur est situé par rapport à la traverse de parechoc est plus particulièrement un côté inférieur à ladite traverse de parechoc lorsque l'ensemble de protection est mis en œuvre sur un véhicule automobile qu'il est destiné à équiper. D'une manière plus générale, le premier côté est situé à l'opposé d'un deuxième côté de la traverse de parechoc, le deuxième côté étant destiné à être situé au-dessus de ladite traverse de parechoc lorsque l'ensemble de protection est mis en œuvre sur le véhicule automobile qu'il est destiné à équiper.

L'ensemble de protection avant conforme au premier aspect de l'invention comprend avantageusement au moins un des perfectionnements ci-dessous, les caractéristiques techniques formant ces perfectionnements pouvant être prises seules ou en combinaison :
- la barre receveuse de jambe prend la forme d'un profilé ou d'une portée cylindrique. Dans cette configuration, la barre receveuse permet de réduire la sévérité des blessures du piéton lors d'un choc piéton ;
- la barre receveuse de jambe est formée par un matériau métallique ;
- la patte de fixation est située au niveau d'une zone centrale de la barre receveuse de jambe, relativement à une direction latérale de l'ensemble de protection avant. Une patte de fixation centrée sur la barre receveuse favorise une répartition des efforts mécaniques imposés à ladite barre receveuse. Une patte de fixation centrée sur la barre receveuse permet de stabiliser un positionnement de la barre receveuse ;
- la patte de fixation est liée à la barre receveuse de jambe au niveau d'une face arrière de ladite barre receveuse de jambe, la face arrière étant située en regard de la traverse de parechoc. En étant fixée à la face arrière de la barre receveuse de jambe, la patte de fixation est hors de portée du piéton lors d'un choc piéton ce qui sécurise la barre receveuse ;
- la patte de fixation s'étend en arrière de la barre receveuse de jambe, en direction du support de radiateur. En s'étendant en arrière de la barre receveuse de jambe, la patte de fixation est hors de portée du piéton lors d'un choc piéton ce qui sécurise la barre receveuse ;
- la patte de fixation est formée d'un matériau métallique. Une telle patte de fixation a des capacités de résistance aux efforts mécaniques renforcées ;
- la patte de fixation est liée au support de radiateur au niveau d'une face inférieure dudit support de radiateur, la face inférieure étant située à l'opposé de la traverse de parechoc relativement audit support de radiateur ;
- dans un premier mode de réalisation de l'invention, la patte de fixation est fixée solidairement au support de radiateur par soudage et/ou par une fixation par écrous ou rivets. D'une manière générale, la patte de fixation peut être fixée au support de radiateur par tout moyen de fixation, qu'il soit détachable ou permanent. On comprend qu'une fixation par soudage et par écrou ou rivet est un moyen de fixation permanent renforcé. On comprend qu'une fixation par soudage est un moyen de fixation permanent. On comprend qu'une fixation par écrou ou rivet est un moyen de fixation détachable, permettant un remplacement aisé. Dans un deuxième mode de réalisation alternatif ou complémentaire au premier mode de réalisation de l'invention, la patte de fixation est fixée solidairement à la barre receveuse de jambe par soudage et/ou par une fixation par écrous ou rivets. D'une manière générale, la patte de fixation peut être fixée sur la barre receveuse de jambe par tout moyen de fixation, qu'il soit détachable ou permanent. On comprend qu'une fixation par soudage et par écrou ou rivet est un moyen de fixation permanent renforcé. On comprend qu'une fixation par soudage est un moyen de fixation permanent. On comprend qu'une fixation par écrou ou rivet est un moyen de fixation détachable ;
- l'organe de liaison est formé d'un matériau métallique. Un tel organe de liaison a des capacités de résistance aux efforts mécaniques renforcées ;
- une terminaison frontale de la patte de liaison est fixée solidairement à la barre receveuse de jambe, préférentiellement par soudage et/ou par une fixation par écrous ou rivets. La terminaison frontale de la patte de liaison forme une extrémité avant de la patte de liaison. D'une manière générale, la terminaison frontale de la patte de liaison peut être fixée sur la barre receveuse de jambe par tout moyen de fixation, qu'il soit détachable ou permanent. On comprend qu'une fixation par soudage et par écrou ou rivet est un moyen de fixation permanent renforcé. On comprend qu'une fixation par soudage est un moyen de fixation permanent. On comprend qu'une fixation par écrou ou rivet est un moyen de fixation détachable ;
- l'angle entre la patte de liaison et la patte d'équerrage est préférentiellement compris entre 30° et 60° ;
- par rapport à la patte de liaison, la patte d'équerrage s'étend dans une direction opposée à la patte de fixation. En d'autres termes, une première extrémité de la patte d'équerrage est située dans une position proximale de la patte de liaison, et une deuxième extrémité de la patte d'équerrage est située dans une position distale de ladite patte de liaison. Ainsi, la patte d'équerrage présente une orientation non parallèle à la patte de liaison. En outre, la patte d'équerrage est destinée à être située du côté d'une aile du véhicule automobile sur lequel l'ensemble de protection avant est destiné à être monté. En d'autres termes, la patte d'équerrage s'étend, dans un plan sensiblement parallèle à la traverse de parechoc, en direction d'un bord périphérique de l'ensemble de protection avant. A titre d'illustration, un tel plan est par exemple parallèle à une face de la traverse de parechoc située en regard de la barre receveuse de jambe, ou à une face de la traverse de parechoc située du côté de la traverse supérieure. En outre, lorsque l'ensemble de protection équipe un véhicule automobile avec lequel il est destiné à collaborer, un tel plan forme préférentiellement un plan horizontal ;
- la patte de liaison et la patte d'équerrage sont formées par des profilés. Par profilé, on comprend que la patte de liaison et la patte d'équerrage sont formées avec un profil déterminé et de section uniforme. De tels profilés permettent d'obtenir une patte de liaison et une patte d'équerrage ayant une très grande résistance mécanique pour un poids très léger, et à moindre coût ;
- la patte d'équerrage comporte une amorce de pliage. Lorsque la patte d'équerrage est soumise à compression, l'amorce de pliage permet d'engager la déformation programmée de la patte d'équerrage. A ce titre, l'amorce de pliage est une zone particulièrement sensible à la déformation dans la patte d'équerrage. Notamment, de façon initiale, en cas de choc avant piéton, la patte d'équerrage se plie le long de l'amorce de pliage, afin que la patte d'équerrage se déforme progressivement selon une configuration attendue. Une telle déformation réduit la rigidité de la liaison et permet une meilleure absorption d'énergie en cas de choc, et donc réduit les risques de blessure lors de l'impact.;
- l'amorce de pliage prend la forme d'une rainure formée au niveau d'une zone médiane de la patte d'équerrage, par exemple au niveau d'une arête longitudinale supérieure. On entend par rainure le fait que l'amorce de pliage forme une entaille creuse, longue et étroite. La rainure est ménagée sur le dessus de la patte d'équerrage, au niveau de l'arrête longitudinale supérieure. Aussi, un profil transverse de la rainure est creux, de sorte à ce qu'un fond de rainure soit la partie la plus profonde de la rainure ;
- l'ensemble de protection avant comporte : (i) une traverse supérieure située d'un deuxième côté relativement à la traverse de parechoc, le deuxième côté étant opposé au premier côté, (ii) des jambes supérieures de fixation situées dans le prolongement des jambes inférieures de fixation, la traverse supérieure étant fixée aux jambes supérieures de fixation au niveau de bords latéraux de la traverse supérieure ; (iii) un support fémoral situé en avant et à hauteur de la traverse supérieure, le support fémoral comportant des longes de liaison aux jambes supérieures de fixation. Le support fémoral est ainsi situé à l'opposé de la barre receveuse de jambe par rapport à la traverse de parechoc. En particulier, lorsque l'ensemble de protection avant est monté sur un véhicule automobile, le support fémoral est destiné à être situé au dessus de la traverse de parechoc, tandis que la barre receveuse de jambe est destinée à être située en-dessous de ladite traverse de parechoc. Dans l'ensemble de protection avant selon l'invention, le support fémoral est destiné à fournir un contact pour les jambes d'un piéton percuté par un véhicule automobile équipé de l'invention et plus particulièrement pour une région de la cuisse du piéton. Le support fémoral est destiné à s'effondrer pour permettre une absorption de choc complémentaire à la barre receveuse de jambe pendant l'impact. Le support fémoral est destiné à renforcer la rigidité du parechoc en phase de roulage grande vitesse. De manière astucieuse, la combinaison du support fémoral et de la barre receveuse de jambe permet de faire basculer le piéton sur le capot du véhicule en réduisant le risque de blessure au niveau des jambes.
- les longes de liaison sont formées d'un matériau métallique. De telles longes de liaison ont des capacités de résistance aux efforts mécaniques renforcées ;
- le support fémoral comporte une partie frontale plane et une partie arrière étagée. Dans cette configuration, avec une partie frontale plane, le support fémoral permet de réduire la sévérité des blessures du piéton lors d'un choc piéton ;
- la partie arrière étagée comporte des plateformes d'appui avec la traverse supérieure ;
- en particulier, de manière préférée, le support fémoral comporte une partie frontale plane et une partie arrière étagée, la partie arrière étagée comportant des plateformes d'appui avec la traverse supérieure, les plateformes d'appui présentant : (i) une zone d'appui vertical avec une face inférieure de la traverse supérieure ; et/ou (ii) une zone d'appui arrière avec une face arrière de la traverse supérieure. La zone d'appui vertical et/ou la zone d'appui arrière est configurée pour mettre en flexion la traverse supérieure ;
- la zone d'appui vertical comporte une pluralité de nervures qui s'étendent en saillie par rapport à la plateforme d'appui correspondante ;
- la pluralité de nervures s'étendent toutes parallèlement les unes par rapport aux autres depuis un bord arrière de ladite plateforme d'appui ;
- le support fémoral comporte des organes de liaison à la traverse supérieure, les organes de liaison étant situé sur une face arrière du support fémoral ;
- les organes de liaison prennent la forme d'ouvertures configurées pour collaborer avec : (i) des pions de fixation passant au travers de la traverse supérieure ; ou (ii) des ergots de liaison qui s'étendent en saillie de la traverse supérieure ; ou (iii) des systèmes de vis et écrous passant au travers de la traverse supérieure ;
- le support fémoral est en plastique. Un tel support fémoral offre un amortissement sécurisant l'impact pour le piéton.

Selon un deuxième aspect de l'invention, il est proposé un véhicule automobile comportant : (i) des longerons avant qui s'étendent longitudinalement d'avant en arrière du véhicule automobile ; (ii) un ensemble de protection avant conforme au premier aspect de l'invention ou selon l'un quelconque de ses perfectionnements, l'ensemble de protection avant étant fixé solidairement à des extrémités avant des longerons avant au niveau des jambes inférieures de fixation dudit ensemble de protection avant.

Un tel véhicule automobile, pourvu de l'ensemble de protection avant, permet d'assurer la sécurité d'un piéton percuté en front de véhicule. Ainsi, cette solution permet de protéger un piéton de blessures graves, tout en étant simple à mettre en œuvre. Le véhicule automobile selon l'invention présente l'avantage de pallier les inconvénients cités plus haut, sans avoir à apporter de modification importante audit véhicule automobile.

Des modes de réalisation variés de l'invention sont prévus, intégrant selon l'ensemble de leurs combinaisons possibles les différentes caractéristiques optionnelles exposées ici.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig.1] illustre une vue schématique d'un avant de véhicule automobile conforme au deuxième aspect de l'invention comprenant un ensemble de protection avant conforme au premier aspect de l'invention ;
[Fig.2] illustre une vue schématique d'une barre receveuse de jambe de l'ensemble de protection avant conforme au premier aspect de l'invention ;
[Fig.3] illustre une vue schématique d'un support fémoral de l'ensemble de protection avant conforme au premier aspect de l'invention.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

Dans les FIGURES ci-dessous, la direction latérale s'entend comme une direction prise entre un côté latéral du véhicule automobile et un côté latéral opposé dudit véhicule automobile. En d'autres termes, la direction latérale s'entend selon une direction qui s'étend depuis un côté passager du véhicule automobile vers un côté conducteur dudit véhicule automobile, ou réciproquement. Les adjectifs latéraux, intérieur et extérieur font référence à une telle direction latérale. En outre, une direction longitudinale s'étend comme étant prise le long d'une direction qui s'étend d'avant en arrière ou d'arrière en avant du véhicule automobile. La direction longitudinale est perpendiculaire à la direction latérale. Les adjectifs frontaux, avant et arrière font référence à cette direction longitudinale. Enfin, la direction verticale s'entend comme étant prise le long d'un axe qui s'étend depuis les roues du véhicule automobile et vers le toit dudit véhicule automobile, ou inversement, la direction verticale étant simultanément perpendiculaire aux directions latérales et longitudinales. Les adjectifs dessus et dessous, ou inférieur et supérieur font référence à cette direction verticale.

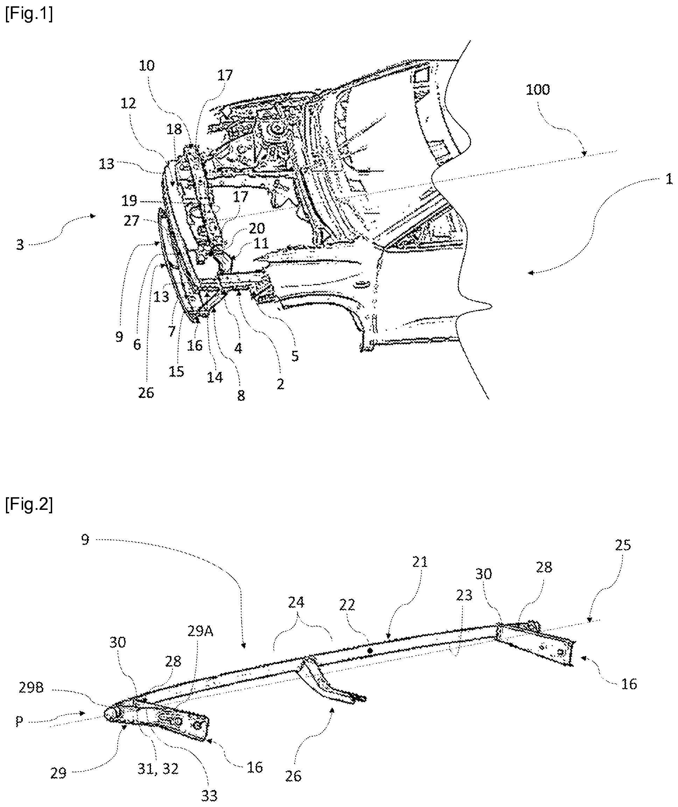

La FIGURE 1 illustre une vue schématique d'un avant de véhicule automobile 1 conforme au deuxième aspect de l'invention. Le véhicule automobile 1 comprend des longerons avant 2 et un ensemble de protection 3 avant conforme au premier aspect de l'invention.

Dans le véhicule automobile 1 montré en FIGURE 1, les longerons avant 2 s'étendent longitudinalement d'avant en arrière. Les longerons avant 2 du véhicule automobile 1 comprennent des extrémités avant 4 opposées à des extrémités arrière 5.

Dans le véhicule automobile 1 montré en FIGURE 1, l'ensemble de protection comporte une traverse 6 de parechoc, un support 7 de radiateur, des jambes inférieures 8 de fixation et une barre 9 receveuse de jambe. L'ensemble de protection 3 avant comporte en outre une traverse supérieure 10, des jambes supérieures 11 de fixation et un support fémoral 12.

La FIGURE 1 montre que la traverse 6 de parechoc de l'ensemble de protection 3 avant conforme au premier aspect de l'invention comporte des extrémités latérales 13 ayant chacune des extensions 14 de longeron. Les extensions 14 de longeron sont fixées solidairement aux longerons avant 2 du véhicule automobile 1, et plus particulièrement au niveau de ses extrémités avant 4. Ces extensions 14 de longerons sont par exemple des extensions déformables de manière à absorber une partie de l'énergie en cas de choc frontal, connu sous le terme d'absorbeur ou sous le terme anglais de « crashbox ».

La FIGURE 1 montre que le support 7 de radiateur de l'ensemble de protection 3 avant conforme au premier aspect de l'invention est situé dans une position inférieure relativement à la traverse 6 de parechoc. Le support 7 de radiateur s'étant entre des terminaisons latérales 15.

On comprend dans la FIGURE 1 que les jambes inférieures 8 de fixation de l'ensemble de protection 3 avant conforme au premier aspect de l'invention sont situées latéralement de part et d'autre du support 7 de radiateur. Le support 7 de radiateur est fixé solidairement aux jambes inférieures 8 de fixation au niveau des terminaisons latérales 15 dudit support 7 de radiateur. Les jambes inférieures 8 de fixation sont fixées solidairement aux longerons avant 2, par exemple à proximité des extrémités avant 4 de chacun des longerons avant 2.

La FIGURE 1 montre que la barre 9 receveuse de jambe de l'ensemble de protection 3 avant conforme au premier aspect de l'invention est située simultanément à hauteur du support 7 de radiateur et en avant dudit support 7 de radiateur. La barre 9 receveuse de jambe est liée aux jambes inférieures 8 de fixation par l'intermédiaire d'un organe de liaison 16.

La FIGURE 1 montre que la traverse supérieure 10 de l'ensemble de protection 3 avant conforme au premier aspect de l'invention est située dans une position supérieure à la traverse 6 de parechoc. La traverse supérieure 10 comprend des bords latéraux 17, une face inférieure 18, une face arrière 19.

La FIGURE 1 montre que les jambes supérieures 11 de fixation de l'ensemble de protection 3 avant conforme au premier aspect de l'invention sont situées dans le prolongement des jambes inférieures 8 de fixation. Les bords latéraux 17 de la traverse supérieure 10 sont fixés aux jambes supérieures 11 de fixation.

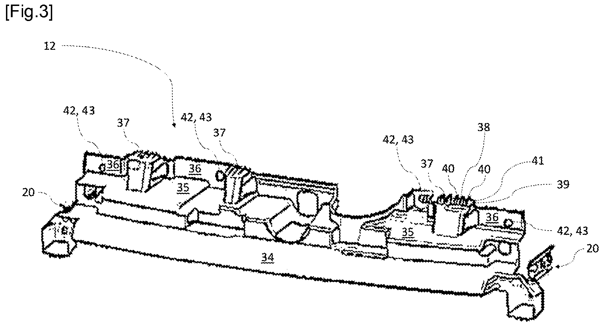

La FIGURE 1 montre que le support fémoral 12 de l'ensemble de protection 3 avant conforme au premier aspect de l'invention est situé en avant et à hauteur de la traverse supérieure 10. Le support fémoral 12 comporte des longes 20 de liaison aux jambes supérieures 11 de fixation, montrées en FIGURE 2 et 3.

La FIGURE 2 illustre une vue schématique de la barre 9 receveuse de jambe de l'ensemble de protection 3 avant conforme au premier aspect de l'invention. La barre 9 receveuse de jambe prend la forme d'un profilé cylindrique 21. La barre 9 receveuse de jambe comprend une face arrière 22 destinée à être située en regard de la traverse 6 de parechoc, et une face avant 23 opposée à ladite face arrière 22. La barre 9 receveuse de jambe comprend une zone centrale 24 qui est centrale dans la barre 9 receveuse de jambe relativement à une direction latérale 25 de l'ensemble de protection 3 avant.

La FIGURE 2 montre que, conformément à l'invention, la barre 9 receveuse de jambe comprend une patte de fixation 26. La patte de fixation 26 permet de fixer solidairement la barre 9 receveuse au support 7 de radiateur comme montré en FIGURE 1.

La FIGURE 2 montre que la patte de fixation 26 de la barre 9 receveuse de jambe de l'ensemble de protection 3 avant conforme au premier aspect de l'invention est située au niveau de la zone centrale 24 de ladite barre 9 receveuse de jambe.

La FIGURE 2 montre que la patte de fixation 26 de la barre 9 receveuse de jambe de l'ensemble de protection 3 avant conforme au premier aspect de l'invention est liée à la barre 9 receveuse de jambe au niveau de la face arrière 22 de ladite barre 9 receveuse de jambe.

La FIGURE 2 montre que la patte de fixation 26 de la barre 9 receveuse de jambe de l'ensemble de protection 3 avant conforme au premier aspect de l'invention s'étend en arrière de la barre 9 receveuse de jambe. On comprend dans la FIGURE 1 que la patte de fixation 26 est liée au support 7 de radiateur au niveau d'une face inférieure 27 dudit support 7 de radiateur, la face inférieure 27 étant située à l'opposé de la traverse 6 de parechoc relativement audit support 7 de radiateur, c'est-à-dire sur la face opposée à la face qui est en vis-à-vis du radiateur.

La FIGURE 2 montre que l'organe de liaison 16 comporte une patte de liaison 28 et une patte d'équerrage 29.

La FIGURE 2 montre que la patte de liaison 28 de l'organe de liaison 16 est destinée à s'étendre depuis la jambe inférieure 8 de fixation vers la barre 9 receveuse de jambe. La patte de liaison 28 comprend une terminaison frontale 30 fixée solidairement à la barre 9 receveuse de jambe.

La FIGURE 2 montre que la patte d'équerrage 29 s'étend entre la patte de liaison 28 et la barre 9 receveuse de jambe. La patte d'équerrage 29 forme un angle non nul avec la patte de liaison 28. Par rapport à la patte de liaison 28, la patte d'équerrage 29 s'étend latéralement dans une direction opposée à la patte de fixation 26. En d'autres termes, une première extrémité 29A de la patte d'équerrage 29 est située dans une position proximale de la patte de liaison 28 : elle est même liée à ladite patte de liaison, par exemple par soudage 28. En revanche, une deuxième extrémité 29B de la patte d'équerrage 29 est située à distance de la patte de liaison 28, de sorte que la patte d'équerrage 29 présente une orientation non parallèle à la patte de liaison 28. La patte d'équerrage 29 s'étend ainsi, dans un plan sensiblement parallèle à la traverse 6 de parechoc, en direction d'un bord périphérique P de l'ensemble de protection 3 avant lorsqu'on considère la patte d'équerrage 29 depuis sa première extrémité 29A vers sa deuxième extrémité 29B. A titre d'illustration, un tel plan est par exemple parallèle à une face de la traverse de parechoc située en regard de la barre receveuse de jambe, ou à une face de la traverse 6 de parechoc située du côté de la traverse supérieure 10. Complémentairement, un tel plan s'étend préférentiellement de manière parallèle à une partie frontale 34 du support fémoral 12. En outre, lorsque l'ensemble de protection 3 équipe un véhicule automobile avec lequel il est destiné à collaborer, un tel plan forme préférentiellement un plan horizontal.

.

La FIGURE 2 montre que la patte d'équerrage 29 comporte une amorce de pliage 31. L'amorce de pliage 31 prend la forme d'une rainure 32 formée au niveau d'une arrête longitudinale supérieure 33 de la patte d'équerrage 29.

La FIGURE 3 illustre une vue schématique du support fémoral 12 de l'ensemble de protection 3 avant conforme au premier aspect de l'invention. Le support fémoral 12 comporte une partie frontale 34, une partie arrière 35, une face arrière 36. La partie frontale 34 du support fémoral 12 est plane. La partie arrière 35 du support fémoral 12 est étagée. La partie arrière 35 étagée du support fémoral 12 comporte des plateformes 37 d'appui avec la traverse supérieure 10.

La FIGURE 3 montre que les plateformes 37 d'appui de la partie arrière 35 étagée du support fémoral 12 de l'ensemble de protection 3 avant conforme au premier aspect de l'invention présente deux zones 38, 39 : une zone d'appui vertical 38 destinée à être en appui de la face inférieure 18 de la traverse supérieure 10 et une zone d'appui arrière 39 destinée à être en appui de la face arrière 19 de la traverse supérieure 10. La zone d'appui vertical 38 comporte une pluralité de nervures 40 qui s'étendent en saillie par rapport à la plateforme 37 d'appui correspondante. Les nervures 40 s'étendent toutes parallèlement les unes par rapport aux autres depuis un bord arrière 41 de ladite plateforme 37 d'appui.

La FIGURE 3 montre que le support fémoral 12 de l'ensemble de protection 3 avant conforme au premier aspect de l'invention comporte des organes de liaison 42 à la traverse supérieure 10. Les organes de liaison 42 prennent la forme d'ouvertures 43 situées sur la face arrière 36 du support fémoral 12.

En synthèse, l'invention concerne un ensemble de protection 3 avant pour véhicule automobile 1. L'ensemble de protection comporte une traverse 6 de parechoc comportant, à chacune de ses extrémités latérales 13, des extensions 14 de longeron destinées à être fixées solidairement à des longerons avant 2 du véhicule automobile 1 ; un support 7 de radiateur situé dans une position inférieure relativement à la traverse 6 de parechoc ; des jambes inférieures 8 de fixation situées latéralement de part et d'autre du support 7 de radiateur, le support 7 de radiateur étant fixés solidairement aux jambes inférieures 8 de fixation au niveau de terminaisons latérales 15 dudit support 7 de radiateur, les jambes inférieures 8 de fixation étant fixés solidairement aux longerons avant 2, une barre 9 receveuse de jambe située simultanément à hauteur du support 7 de radiateur et en avant dudit support 7 de radiateur, la barre 9 receveuse de jambe étant liée aux jambes inférieures 8 de fixation par l'intermédiaire d'un organe de liaison 16. Conformément à l'invention, la barre 9 receveuse de jambe est fixée solidairement au support 7 de radiateur par l'intermédiaire d'une patte de fixation 26.

Bien sûr, l'invention n'est pas limitée aux exemples qui viennent d'être décrits et de nombreux aménagements peuvent être apportés à ces exemples sans sortir du cadre de l'invention.

## Revendications

1. Ensemble de protection (3) avant pour véhicule automobile (1), l'ensemble de protection (3) comportant :
- une traverse (6) de parechoc fixée à chacune de ses extrémités latérales (13) à des extensions (14) de longeron destinées à être fixées solidairement à des longerons avant (2) du véhicule automobile (1) ;
- un support (7) de radiateur situé d'un premier côté relativement à la traverse (6) de parechoc ;
- des jambes inférieures (8) de fixation situées latéralement de part et d'autre du support (7) de radiateur, le support (7) de radiateur étant fixés solidairement aux jambes inférieures (8) de fixation au niveau de terminaisons latérales (15) dudit support (7) de radiateur, les jambes inférieures (8) de fixation étant destinés à être fixés aux longerons ;
- une barre (9) receveuse de jambe située simultanément à hauteur du support (7) de radiateur et en avant dudit support (7) de radiateur, la barre (9) receveuse de jambe étant liée aux jambes inférieures (8) de fixation par l'intermédiaire d'un organe de liaison (16) ;
où la barre (9) receveuse de jambe est fixée solidairement au support (7) de radiateur par l'intermédiaire d'une patte de fixation (26) et l'organe de liaison (16) comporte :
- une patte de liaison (28) qui s'étend depuis la jambe inférieure (8) de fixation vers la barre (9) receveuse de jambe ;
- une patte d'équerrage (29) qui s'étend entre la patte de liaison (28) et la barre (9) receveuse de jambe, la patte d'équerrage (29) formant un angle non nul avec la patte de liaison (28).

2. Ensemble de protection (3) selon la revendication précédente, dans lequel la patte de fixation (26) est située au niveau d'une zone centrale (24) de la barre (9) receveuse de jambe, relativement à une direction latérale (25) de l'ensemble de protection (3) avant.

3. Ensemble de protection (3) selon l'une quelconque des revendications précédentes, dans lequel la patte de fixation (26) est liée au support (7) de radiateur au niveau d'une face inférieure (27) dudit support (7) de radiateur, la face inférieure (27) étant située à l'opposé de la traverse (6) de parechoc relativement audit support (7) de radiateur.

4. Ensemble de protection (3) selon l'une des revendications précédentes, dans lequel la patte d'équerrage (29) comporte une amorce de pliage (31).

5. Ensemble de protection (3) selon la revendication précédente, dans lequel l'amorce de pliage (31) prend la forme d'une rainure (32) formée au niveau d'une zone médiane de la patte d'équerrage (29), au niveau d'une arrête longitudinale supérieure (33).

6. Ensemble de protection (3) selon l'une quelconque des revendications précédentes, dans lequel l'ensemble de protection (3) avant comporte :
- une traverse supérieure (10) située d'un deuxième côté relativement à la traverse (6) de parechoc, le deuxième côté étant opposé au premier côté ;
- des jambes supérieures (11) de fixation situées dans le prolongement des jambes inférieures (8) de fixation, la traverse supérieure (10) étant fixée aux jambes supérieures (11) de fixation au niveau de bords latéraux (17) de la traverse supérieure (10) ;
- un support fémoral (12) situé en avant et à hauteur de la traverse supérieure (10), le support fémoral (12) comportant des longes (20) de liaison aux jambes supérieures (11) de fixation.

7. Ensemble de protection (3) selon la revendication précédente, dans lequel le support fémoral (12) comporte une partie frontale (34) plane et une partie arrière (35) étagée, la partie arrière (35) étagée comportant des plateformes (37) d'appui avec la traverse supérieure (10), les plateformes (37) d'appui présentant :
- une zone d'appui vertical (38) avec une face inférieure (18) de la traverse supérieure (10) ; et/ou
- une zone d'appui arrière (39) avec une face arrière (19) de la traverse supérieure (10).

8. Ensemble de protection (3) selon la revendication précédente, dans lequel la zone d'appui vertical (38) comporte une pluralité de nervures (40) qui s'étendent en saillie par rapport à la plateforme (37) d'appui correspondante.

9. Véhicule automobile (1) comportant :
- des longerons avant (2) qui s'étendent longitudinalement d'avant en arrière du véhicule automobile (1) ;
- un ensemble de protection (3) avant selon l'une quelconque des revendications précédentes, l'ensemble de protection (3) avant étant fixé solidairement à des extrémités avant (4) des longerons avant (2) au niveau des jambes inférieures (8) de fixation dudit ensemble de protection (3) avant.

## Patentansprüche

1. Frontschutzbaugruppe (3) für ein Kraftfahrzeug (1), wobei die Schutzbaugruppe (3) folgendes umfasst:
- eine Parechoc-Traverse (6), die an jedem ihrer seitlichen Enden (13) an Längsträgerverlängerungen (14) befestigt ist, die dazu bestimmt sind, an vorderen Längsträgern (2) des Kraftfahrzeugs (1) fest befestigt zu werden;
- einem Heizkörperträger (7), der sich auf einer Seite relativ zum Parechoc-Querträger (6) befindet;
- seitlich beiderseits des Heizkörperträgers (7) angeordnete untere Befestigungsbeine (8), wobei der Heizkörperträger (7) an seitlichen Enden (15) des Heizkörperträgers (7) mit den unteren Befestigungsbeinen (8) fest verbunden ist, wobei die unteren Befestigungsbeine (8) an den Längsträgern befestigt werden sollen;
- eine Beinaufnahmestange (9), die gleichzeitig in Höhe des Heizkörperträgers (7) und vor dem Heizkörperträger (7) angeordnet ist, wobei die Beinaufnahmestange (9) über ein Verbindungsglied (16) mit den unteren Befestigungsbeinen (8) verbunden ist;
wobei die Beinaufnahmestange (9) über eine Befestigungslasche (26) fest mit dem Kühlerträger (7) verbunden ist und das Verbindungsglied (16) aufweist:
- eine Verbindungslasche (28), die sich vom Unterschenkel (8) zur Unterschenkelaufnahmestange (9) erstreckt;
- eine Ausrichtlasche (29), die sich zwischen der Verbindungslasche (28) und der Beinaufnahmestange (9) erstreckt, wobei die Ausrichtlasche (29) mit der Verbindungslasche (28) einen Winkel ungleich null bildet.

2. Schutzanordnung (3) nach dem vorhergehenden Anspruch, wobei die Befestigungslasche (26) an einem zentralen Bereich (24) der Beinaufnahmestange (9) relativ zu einer seitlichen Richtung (25) der vorderen Schutzanordnung (3) angeordnet ist.

3. Schutzanordnung (3) nach einem der vorhergehenden Ansprüche, bei der die Befestigungslasche (26) an einer Unterseite (27) des Kühlerträgers (7) mit dem Kühlerträger (7) verbunden ist, wobei die Unterseite (27) bezüglich des Kühlerträgers (7) gegenüber dem Parechock-Querträger (6) angeordnet ist.

4. Schutzanordnung (3) nach einem der vorhergehenden Ansprüche, bei der die Ausrichtlasche (29) einen Biegevorsprung (31) aufweist.

5. Schutzanordnung (3) nach dem vorhergehenden Anspruch, bei der der Biegeansatz (31) die Form einer Nut (32) annimmt, die an einem mittleren Bereich der Ausrichtlasche (29) an einer oberen Längskante (33) ausgebildet ist.

6. Schutzanordnung (3) nach einem der vorhergehenden Ansprüche, wobei die vordere Schutzanordnung (3) Folgendes umfasst:
- ein oberer Querträger (10), der auf einer zweiten Seite relativ zum Querträger (6) von Parechoc angeordnet ist, wobei die zweite Seite der ersten Seite gegenüberliegt;
- obere Befestigungsbeine (11), die sich in Verlängerung der unteren Befestigungsbeine (8) befinden, wobei der obere Querträger (10) an den oberen Befestigungsbeinen (11) an den Seitenrändern (17) des oberen Querträgers (10) befestigt ist;
- eine Femurstütze (12), die vor und in Höhe der oberen Traverse (10) angeordnet ist, wobei die Femurstütze (12) Verbindungslaschen (20) für die oberen Beine (11) aufweist.

7. Schutzanordnung (3) nach dem vorhergehenden Anspruch, wobei die femorale Stütze (12) einen ebenen vorderen Abschnitt (34) und einen abgestuften hinteren Abschnitt (35) aufweist, wobei der abgestufte hintere Abschnitt (35) Stützplattformen (37) mit dem oberen Querträger (10) aufweist, wobei die Stützplattformen (37) aufweisen:
- einem vertikalen Auflagebereich (38) mit einer Unterseite (18) des oberen Querträgers (10) und/oder
- einen hinteren Auflagebereich (39) mit einer Rückseite (19) des oberen Querträgers (10).

8. Schutzanordnung (3) nach dem vorhergehenden Anspruch, wobei der vertikale Stützbereich (38) eine Vielzahl von Rippen (40) aufweist, die sich von der entsprechenden Stützplattform (37) erstrecken.

9. Kraftfahrzeug (1) mit:
- vordere Längsträger (2), die sich in Längsrichtung von vorn nach hinten des Kraftfahrzeugs (1) erstrecken;
- eine vordere Schutzanordnung (3) nach einem der vorhergehenden Ansprüche, wobei die vordere Schutzanordnung (3) an den vorderen Enden (4) der vorderen Längsträger (2) an den unteren Befestigungsbeinen (8) der vorderen Schutzanordnung (3) fest befestigt ist.

## Claims

1. Front protection assembly (3) for a motor vehicle (1), the protection assembly (3) comprising:
- a bumper cross-member (6) fixed at each of its lateral ends (13) to longitudinal extensions (14) intended to be fixed integrally to front longitudinal members (2) of the motor vehicle (1);
- a radiator support (7) located on a first side relative to the bumper cross-member (6);
- fixing lower legs (8) located laterally on either side of the radiator support (7), the radiator support (7) being fixed integrally to the fixing lower legs (8) at the level of lateral terminations (15) of said radiator support (7), the fixing lower legs (8) being intended to be fixed to the side rails;
- a leg-receiving bar (9) located simultaneously on the height of the radiator support (7) and in front of said radiator support (7), the leg-receiving bar (9) being connected to the lower fixing legs (8) via a connecting member (16);
where the leg-receiving bar (9) is fixed integrally to the radiator support (7) by means of a fixing lug (26) and the connecting member (16) comprises:
- a connecting lug (28) which extends from the lower leg (8) of attachment towards the leg receiving bar (9);
- a squaring lug (29) which extends between the connecting lug (28) and the leg-receiving bar (9), the squaring lug (29) forming a non-zero angle with the connecting lug (28).

2. Protection assembly (3) according to the previous claim, in which the fixing lug (26) is located on the level of a central zone (24) of the leg-receiving bar (9), relative to a lateral management (25) of the front protection assembly (3).

3. Protection assembly (3) according to any one of the previous claims, in which the fixing lug (26) is connected to the radiator support (7) to the level of a lower face (27) of said radiator support (7), the lower face (27) being located opposite the bumper cross-member (6) relative to said radiator support (7).

4. Protection assembly (3) according to one of the previous claims, in which the squaring lug (29) comprises a fold leader (31).

5. Protective assembly (3) according to the previous claim, in which the fold leader (31) takes the shape of a groove (32) formed at the level of a median zone of the squaring lug (29), at the level of an upper longitudinal edge (33).

6. Protection assembly (3) according to any one of the previous claims, in which the front protection assembly (3) comprises:
- an upper cross-member (10) located on a second side relative to the bumper cross-member (6), the second side being opposite the first side;
- upper fixing legs (11) located in the extension of the lower fixing legs (8), the upper crosspiece (10) being fixed to the upper fixing legs (11) at the level of lateral edges (17) of the upper crosspiece (10);
- a femoral support (12) located in front of and at the height of the upper cross-member (10), the femoral support (12) comprising loins (20) for connection to the upper fixing legs (11).

7. Protection assembly (3) according to the previous claim, in which the femoral support (12) comprises a flat front part (34) and a stepped rear part (35), the stepped rear part (35) comprising platforms (37) for bearing against the upper cross-member (10), the bearing platforms (37) having:
- a vertical support zone (38) with a lower face (18) of the upper cross-member (10); and/or
- a rear support zone (39) with a rear face (19) of the upper cross-member (10).

8. Protective assembly (3) according to the previous claim, in which the vertical bearing zone (38) comprises a plurality of ribs (40) which project in report from the corresponding bearing platform (37).

9. Motor vehicle (1) comprising:
- front side rails (2) which extend longitudinally from the front to the rear of the motor vehicle (1);
front protection assembly (3) according to any one of the previous claims, the front protection assembly (3) being fixed integrally to front ends (4) of the front spars (2) to the level of the lower legs (8) for fixing said front protection assembly (3).
